# EUROPEAN PATENT APPLICATION

(11) **EP 3 073 394 A1**
(43) Date of publication of application: **28.09.2016**
(21) Application number: 16158387.7
(22) Date of filing: 03.03.2016
(51) Int. Cl.: G06F 17/30

(54) **IMAGE PROCESSING DEVICE, IMAGE PROCESSING METHOD, PROGRAM, AND RECORDING MEDIUM**

(30) Priority: 24.03.2015 JP 2015061079
(71) Applicant: Fujifilm Corporation, Minato-ku Tokyo 106-8620 (JP)
(72) Inventor: FUKUSHIMA, Toshimitsu, Tokyo 107-0052 (JP)
(74) Representative: Klunker . Schmitt-Nilson . Hirsch

(57) **Abstract**

In the image processing device, a moving image analysis section performs image analysis for an analysis target moving image for which image analysis has not yet been performed, and generates second analysis result data about the analysis target moving image, including an analysis result thereof. A similar data detection section collates first analysis result data generated by performing image analysis for a still image owned by a user with the second analysis result data, and detects second analysis result data of which a similarity to the first analysis result data is equal to or greater than a reference value as similarity analysis result data. A moving image information output section selects an analysis target moving image including the similarity analysis result data from among the analysis target moving images as the processing target moving image, and outputs information about the selected processing target moving image.

## Description

### BACKGROUND OF THE INVENTION

### 1. Field of the Invention

The present invention relates to an image processing device, an image processing method, a program and a recording medium capable of selecting a processing target moving image which is a target of image processing from among plural moving images owned by a user and outputting the selected processing target moving image.

### 2. Description of the Related Art

In recent years, portable terminals such as a smart phone or a tablet terminal have rapidly spread, and the number of still images (photographs) captured by these portable terminals has increased. In this regard, opportunities to capture a moving image have also increased. Recently, as a service that uses a moving image, as disclosed in "Moving Image Photo! Service", [online], Fujifilm Corporation, retrieved on February 9, 2015], Internet <URL: http://fujifilm.jp/personal/print/photo/dogaphoto/>, a system that images (captures) printed matter such as a photograph using a portable terminal and then reproduces (AR-reproduces) a moving image related to the printed matter on a screen of the portable terminal using an augmented reality (AR) technique has been proposed.

In such a system, the AR reproduction of the moving image related to the printed matter is performed according to the following steps (1) to (6).
(1) If a user selects a moving image to be printed from among plural moving images using a dedicated-use application operated on a portable terminal, the selected moving image is uploaded to a server.
(2) The server extracts frame images of a representative scene from the moving image uploaded from the portable terminal.
(3) The frame images of the representative scene extracted by the server are downloaded to the portable terminal.
(4) The user selects a frame image to be printed from among the frame images of the representative scene displayed as a list on a screen of the portable terminal, and makes a printing order.
(5) The server generates printed matter of the frame image of the representative scene ordered by the user, and performs image processing a moving image associated with the frame image for AR reproduction.
(6) After the delivered printed matter is imaged (captured) using the portable terminal, the user downloads the moving image for AR reproduction associated with the printed matter from the server to be reproduced on the screen of the portable terminal based on the AR technique.

In this system, it is necessary that the user selects a moving image to be used for printing from among plural moving images in the step (1), but the user may own a large amount of moving images and may already have forgotten imaging contents thereof. In this case, it is very difficult to select a moving image.

Further, it is necessary that a moving image reproduced on the screen of the portable terminal by the AR technique can also be reproduced by a third party who does not own a file of an original moving image. Thus, a specification for reproducing, in a streaming manner, a file of a moving image uploaded to the server by the user who orders printing (for performing reproducing while downloading the file from the server) is used. That is, in order to use this system, it is essential to upload a moving image to the server.

However, since a moving image generally has a large file size compared with a still image, for example, in the step (1), it takes time to upload a file to the server from the portable terminal, which results in a waiting time of the user. Since a long waiting time leads to reduction in motivation for using the system, it is desirable to shorten the waiting time of the user for use of the system in view of service improvement.

Here, as related art techniques related to the invention, there are JP2012-032762A which relates to a remote control system that operates a user terminal such as a portable phone terminal from a support terminal provided at a remote place, JP2008-193197A which relates to a moving image delivery server that stores data of a moving image captured by a portable communication terminal in a web server and performs delivery to the portable communication terminal, JP2012-105205A which relates to a key frame extraction device or the like, JP2013-186679A which relates to a printing method or the like for determining image correction parameters when plural images are input, and the like.

### SUMMARY OF THE INVENTION

To solve the above problems, a first object of the invention is to provide an image processing device, an image processing method, a program and a recording medium capable of automatically selecting a processing target moving image from among plural moving images and outputting information about the selected processing target moving image.

A second object of the invention is to provide an image processing device, an image processing method, a program and a recording medium capable of shortening a waiting time of a user when transmitting the processing target moving image to an external processing device from a portable terminal, in addition to the first object.

According to an aspect of the invention, there is provided an image processing device that selects a processing target moving image which is a target of image processing from among a plurality of moving images owned by a user and outputs information about the selected processing target moving image, the device including: a moving image analysis section that performs image analysis for an analysis target moving image which is a moving image for which image analysis has not yet been performed, included in the plurality of moving images, and generates second analysis result data about the analysis target moving image, including an analysis result of the image analysis; a similar data detection section that collates first analysis result data generated by performing image analysis for a still image owned by the user with the second analysis result data generated by the moving image analysis section to calculate a similarity between the first analysis result data and the second analysis result data, and detects second analysis result data of which the similarity to the first analysis result data is equal to or greater than a reference value or is smaller than the reference value as similarity analysis result data; and a moving image information output section that selects the analysis target moving image including the similarity analysis result data detected by the similar data detection section from among the analysis target moving images as the processing target moving image, and outputs information about the selected processing target moving image.

Here, it is preferable that the moving image analysis section performs at least one type of image analysis in the image analysis performed with respect to the still image, included in the first analysis result data, to generate the second analysis result data.

Further, it is preferable that the moving image analysis section extracts a frame image from the analysis target moving image, and performs image analysis for the extracted frame image to generate the second analysis result data of the analysis target moving image.

Further, it is preferable that the moving image analysis section performs the image analysis for the frame images in units of a predetermined number of frame images.

Further, it is preferable that the moving image analysis section performs the image analysis for the frame images in the order of imaging, and terminates the image analysis at a time point when second analysis result data similar to the first analysis result data is acquired.

Further, it is preferable that the moving image analysis section performs the image analysis during other than the user using the image processing device.

Further, it is preferable that the similar data detection section calculates the similarity between the first analysis result data and the second analysis result data with respect to at least one of whether the numbers of faces match each other, whether the same person is included, whether imaging dates and times match each other or are within a predetermined range, whether imaging positions match each other or are within a predetermined range, and whether the same keyword of annotation information is included.

Further, it is preferable that the similar data detection section calculates the similarity between the first analysis result data and the second analysis result data by performing weighting with respect to at least two of whether the numbers of faces match each other, whether the same person is included, whether imaging dates and times match each other or are within a predetermined range, whether imaging positions match each other or are within a predetermined range, and whether the same keyword of annotation information is included.

Further, it is preferable that the moving image information output section transmits the information about the processing target moving image to an external processing device that performs image processing of the processing target moving image through a network.

Further, it is preferable that the moving image information output section transmits, as the information about the processing target moving image, a list of the processing target moving images to the external processing device.

Further, it is preferable that the moving image information output section transmits, as the information about the processing target moving image, the processing target moving image to the external processing device.

Further, it is preferable that the moving image information output section transmits, as the information about the processing target moving image, link information about the processing target moving image to the external processing device.

Further, it is preferable that the moving image information output section transmits the information about the processing target moving image to the external processing device during other than the user using the image processing device.

Further, it is preferable that the external processing device includes a moving image processing control section that performs a control, before the user uses the processing target moving image received from the moving image information output section, so that image processing necessary for the use is performed with respect to the processing target moving image.

Further, it is preferable that the external processing device includes a still image analysis section that performs image analysis for the still image to generate the first analysis result data, and that the image processing device further comprises a first analysis result data acquisition section that acquires the first analysis result data from the still image analysis section through a network during other than the user using the image processing device.

Further, it is preferable that the image processing device further includes: a still image analysis section that performs the image analysis for the still image to generate the first analysis result data.

Further, it is preferable that the still image analysis section performs at least one type of image analysis among plural types of image analysis including face detection, face recognition, acquisition of imaging date and time information, acquisition of imaging position information, and acquisition of annotation information.

Further, it is preferable that the still image analysis section sequentially performs the plural types of image analysis, and generates, at a time point when at least one analysis result of the plural types of image analysis is acquired, the first analysis result data including the at least one analysis result.

Further, it is preferable that the still image analysis section sequentially performs the plural types of image analysis, and generates, at a time point when all analysis results of the plural types of image analysis are acquired, the first analysis result data including all the analysis results.

Further, it is preferable that the still image is a still image for which printing has ordered in the past by the user.

According to another aspect of the invention, there is provided an image processing method for selecting a processing target moving image which is a target of image processing from among a plurality of moving images owned by a user and outputting information about the selected processing target moving image, including the steps of: performing image analysis for an analysis target moving image which is a moving image for which image analysis has not yet been performed, included in the plurality of moving images, and generating second analysis result data about the analysis target moving image, including an analysis result of the image analysis, by a moving image analysis section; collating first analysis result data generated by performing image analysis for a still image owned by the user with the second analysis result data generated by the moving image analysis section to calculate a similarity between the first analysis result data and the second analysis result data, and detecting second analysis result data of which the similarity to the first analysis result data is equal to or greater than a reference value or is smaller than the reference value as similarity analysis result data, by a similar data detection section; and selecting the analysis target moving image including the similarity analysis result data detected by the similar data detection section from among the analysis target moving images as the processing target moving image, and outputting information about the selected processing target moving image, by a moving image information output section.

According to still another aspect of the invention, there is provided a program that causes a computer to execute the steps of the above-described image processing method.

According to still another aspect of the invention, there is provided a computer-readable recording medium that stores a program that causes a computer to execute the steps of the above-described image processing method.

According to the invention, a processing target moving image is automatically selected from among plural moving images, and information about the selected moving image is output to an external processing device. Thus, according to the invention, even when a user owns a large amount of moving images and has already forgotten imaging contents thereof, it is possible to automatically select a user preferred moving image, and thus, it is possible to reduce a user's effort for selecting a moving image.

Further, according to the invention, a user preferred moving image is transmitted to an external processing device during other than a user using the image processing device, and image processing necessary for use of the moving image is performed. Thus, according to the invention, when the user uses the moving image, it is possible to shorten a waiting time until the moving image is transmitted to the external processing device, and thus, it is possible to prevent reduction in motivation to use a system.

### BRIEF DESCRIPTION OF THE DRAWINGS

Fig. 1 is a block diagram illustrating an embodiment of a configuration of an image processing device of the invention.
Fig. 2 is a block diagram illustrating the embodiment of a configuration of a server shown in Fig. 1.
Fig. 3 is a block diagram illustrating the embodiment of an internal configuration of a portable terminal shown in Fig. 1.
Fig. 4 is a flowchart illustrating an example of an operation of a still image analysis section.
Fig. 5 is a flowchart of another example of the operation of the still image analysis section.
Fig. 6 is a conceptual diagram illustrating an example of a format of first analysis result data.
Fig. 7 is a flowchart illustrating an example of an operation when an image processing device generates AR content and outputs an output image of a selected image.
Figs. 8A to 8E are conceptual diagrams illustrating examples of display screens of a display section of a portable terminal.
Fig. 9 is a flowchart illustrating an example of an operation when the image processing device generates an AR reproduction moving image and reproduces the AR reproduction moving image to be displayed.
Fig. 10 is a flowchart illustrating an example of an operation when the image processing device processes a moving image which is a processing target beforehand.
Fig. 11 is a conceptual diagram illustrating an example of a state when a moving image where the same person is included based on face recognition is uploaded to a server.
Fig. 12 is a conceptual diagram illustrating an example of a state subsequent to Fig. 11 when the moving image where the same person is included based on face recognition is uploaded to the server.
Fig. 13 is a conceptual diagram illustrating an example of a state subsequent to Fig. 12 when the moving image where the same person is included based on face recognition is uploaded to the server.
Fig. 14 is a conceptual diagram illustrating an example of a state subsequent to Fig. 13 when the moving image where the same person is included based on face recognition is uploaded to the server.

### DESCRIPTION OF THE PREFERRED EMBODIMENTS

Hereinafter, an image processing device of the invention will be described in detail based on preferred embodiments shown in the accompanying drawings.

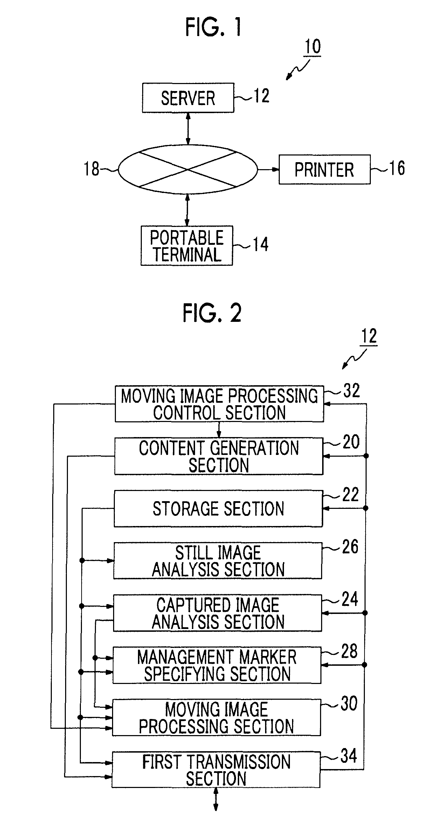

Fig. 1 is a block diagram illustrating an embodiment of a configuration of an image processing device of the invention. An image processing device 10 shown in Fig. 1 selects a processing target moving image which is an image processing target from plural moving images owned by a user, and outputs information about the selected processing target moving image. The image processing device 10 includes a server 12, a portable terminal 14, and a printer 16. The server 12, the portable terminal 14, and the printer 16 are connected to each other through a network 18 such as the Internet.

Fig. 2 is a block diagram illustrating an embodiment of a configuration of the server shown in Fig. 1. The server 12 shown in Fig. 2 is an example of an external processing device that performs image processing with respect to a moving image. One or more CPU (Central Processing Unit), which is not shown in the Figure, performs by various software is loaded into the CPU, and a content generation section 20, a storage section 22, a captured image analysis section 24, a still image analysis section 26, a management marker specifying section 28, a moving image processing section 30, a moving image processing control section 32, and a first transmission section 34 are controlled.

The content generation section 20 extracts frame images from a moving image, and generates AR content in which the moving image and a selected image which is an image selected from among the frame images extracted from the moving image by a user of the portable terminal 14 are associated with each other.

Here, a method for extracting the frame images from the moving image is not particularly limited. For example, the frame images may be extracted from the moving image at a specific time interval.

Alternatively, using a key frame extraction (KFE) technique, a frame image which is a key in a scene change, for example, may be extracted. In the KFE technique, for example, each frame image of a moving image is analyzed, and a color tone, brightness, blurring, and the like of the frame image are determined. Then, a frame image before or after the color tone or brightness is greatly changed, or a frame image in which blurring does not occur due to appropriate exposure is extracted.

Further, a size, a direction, and an expression (a smiling face, a crying face, or the like) of the face of a person in a moving image may be detected, and a frame image may be extracted based on the detection result. Further, when sound is included in a moving image, a frame image may be extracted from the moving image before or after a time point (time code) when the sound becomes loud. By extracting a frame image from a moving image using the above-described method, it is possible to extract a representative scene of the moving image as a frame image.

The storage section 22, which is configured by SSD(Solid State Drive) or HDD(Hard Disc Drive), stores a variety of data. In the storage section 22, for example, as described later, a still image (a still image and a frame image) for which printing has ordered in the past by a user and first analysis result data, or AR content generated by the content generation section 20, that is, a selected image and specifying information thereof is associated as a management marker of the selected image with a moving image.

Here, the management marker refers to a feature amount of an image read from a still image by performing image analysis for the still image based on a predetermined algorithm, and for example, includes edge information of an imaging target included in the still image, position information of an edge, or the like. The management marker may be a still image itself, or may be specifying information for specifying the still image. The specifying information for the still image may be any information capable of specifying a selected image from captured images.

The captured image analysis section 24 performs image analysis for a captured image (which will be described later) to acquire a management marker of the captured image.

The still image analysis section 26 performs image analysis for a still image owned by a user, such as a still image for which printing has ordered in the past by the user, which is stored in the storage section 22, for example, and generates first analysis result data including the analysis result.

The still image analysis section 26 may determine whether a specific still image is a still image for which printing has ordered in the past by a user based on a printing order history, for example.

The still image analysis section 26 performs at least one type of image analysis among plural types of image analysis including face detection, face recognition, acquisition of imaging date and time information, acquisition of imaging position (GPS) information, and acquisition of annotation information, for example, using a predetermined image analysis method.

Here, the face detection refers to a process of detecting whether a face is included in a still image, how many faces are included therein, or the like, and the face recognition refers to a process of generating model data of faces in order to specify who a person included in a still image, both are known analysis processes.

Further, the imaging date and time and the imaging position information are information included in metadata such as header information (Exif information) of a still image.

The annotation information refers to information acquired by performing annotation analysis with respect to a still image. The annotation analysis refers to a process of analyzing a scene of a still image. If a scene of a still image is analyzed by the annotation analysis, annotation information (annotation tag) corresponding to the analyzed scene, for example, information corresponding to a theme such as a baby, a trip, a marriage, a child, or the like is assigned to the still image.

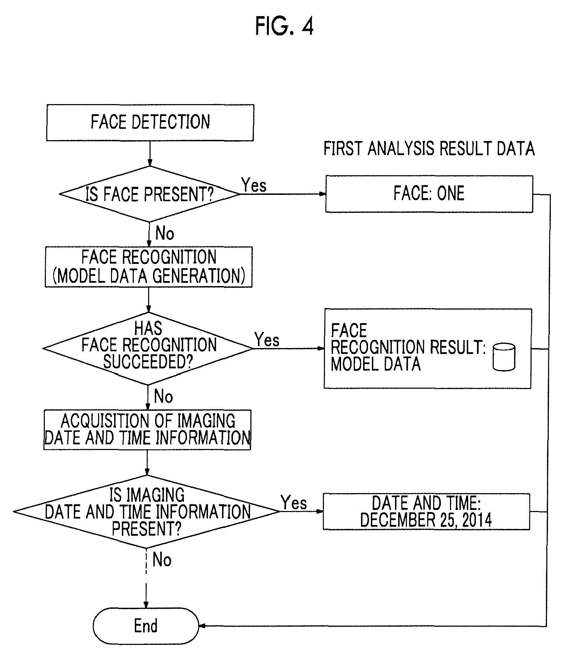

The still image analysis section 26 may sequentially perform plural types of image analysis as shown in Fig. 4, for example, and may terminate an image analysis process at a time point when at least one analysis result of the plural types of image analysis is acquired to generate first analysis result data including at least one analysis result.

In the example shown in Fig. 4, first, face detection is performed with respect to a still image. When a face is present in the still image based on the detection result, for example, at a time point when an analysis result where the number of face is one is acquired, the image analysis process is terminated.

On the other hand, when a face is not present in the still image, the next image analysis is performed. In the case of this example, plural types of image analysis including face recognition, acquisition of imaging date and time information, acquisition of imaging position information (not shown), and acquisition of annotation information (not shown) are sequentially performed, and the process is terminated at a time point when a desired analysis result is acquired.

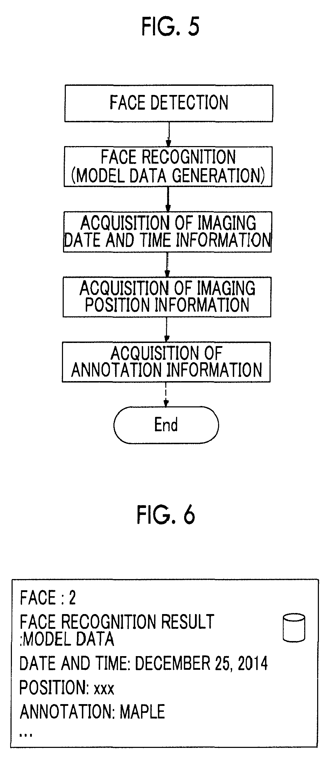

As shown in Fig. 5, the still image analysis section 26 may sequentially perform plural types of image analysis, and may generate, at a time point when all analysis results of the plural types of image analysis are acquired, first analysis result data including all the analysis results.

In the example shown in Fig. 5, plural types of image analysis including face detection, face recognition, acquisition of imaging date and time information, acquisition of imaging position information, and acquisition of annotation information are sequentially performed, and the process is terminated at a time point when all the analysis results are acquired.

The first analysis result data refers to data which is output as a result of image analysis performed by the still image analysis section 26, and it is assumed that its format is set in advance. For example, as shown in Fig. 6, the first analysis result data may be a file of text data where image analysis content or its analysis result is included, or may be, when face recognition is performed, a file including text data or binary data of face model data (predetermined calculation results).

The management marker specifying section 28 specifies, as a specific management marker, a management marker of a selected image corresponding to a management marker of a captured image acquired by the captured image analysis section 24 from management markers of selected images stored in the storage section 22. The management marker specifying section 28 retrieves the management markers of the selected images stored in the storage section 22 based on the management marker of the captured image, for example, to specify the management marker of the selected image corresponding to the management marker of the captured image.

The moving image processing section 30 generates an AR reproduction moving image from a related moving image associated with the specific management marker. That is, the moving image processing section 30 generates the AR reproduction moving image from the related moving image based on the specific management marker, that is, a frame image selected by a user from among frame images extracted from the moving image or its specifying information.

In order to reduce a file size of the moving image, for example, the moving image processing section 30 lowers a resolution or a bit rate of the moving image to generate an AR reproduction moving image with a small-sized file.

The moving image processing control section 32 performs a control, before a user uses a processing target moving image received from the moving image information output section 50, so that image processing necessary for the use is performed with respect to the processing target moving image.

In this embodiment, the moving image processing control section 32 performs a control so that a frame image is extracted from the processing target moving image by the content generation section 20 and an AR reproduction moving image is generated from the processing target moving image by the moving image processing section 30.

The first transmission section 34 transmits a variety of data including a moving image, a captured image, first analysis result data, and the like between the server 12 and the portable terminal 14.

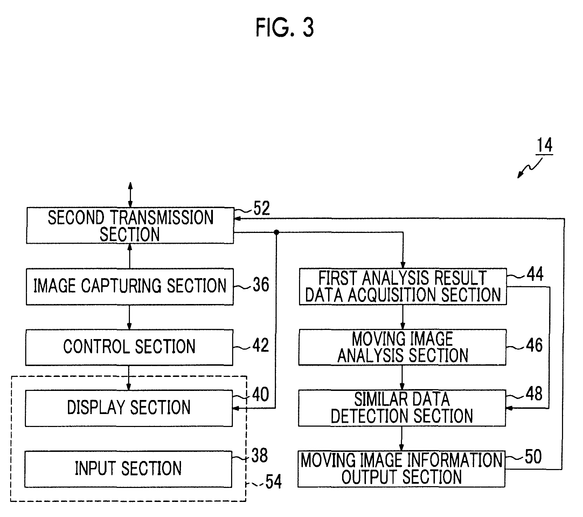

Subsequently, Fig. 3 is a block diagram illustrating an embodiment of an internal configuration of the portable terminal shown in Fig. 1. The portable terminal 14 is a smart phone, a tablet terminal or the like used by a user. One or more CPU (Central Processing Unit), which is not shown in the Figure, performs by various software is loaded into the CPU, and as shown in Fig. 3, an image capturing section 36, an input section 38, a display section 40, a control section 42, a first analysis result data acquisition section 44, a moving image analysis section 46, a similar data detection section 48, a moving image information output section 50, and a second transmission section 52 are controlled.

The image capturing section 36 captures an output image (AR print) which is output based on a selected image, or the like to acquire a captured image.

The input section 38 is a component through which various instructions are input from a user.

The display section 40 reproduces and displays a moving image or the like.

In this embodiment, it is assumed that a touch panel 54 configures the input section 38 and the display section 40.

The control section 42 performs a control, when an output image is captured by the image capturing section 36, so that the AR reproduction moving image generated based on the captured image is reproduced and displayed in the display section 40.

Here, when reproducing the moving image in the display section 40, the control section 42 may reproduce the moving image using an AR technique (AR reproduction), or may reproduce the moving image without using the AR technique (normal reproduction). When reproducing the moving image based on the AR reproduction, the control section 42 performs a control so that a captured output image is displayed in the display section 40 and the moving image is reproduced in a displayed portion of the output image displayed in the display section 40. Further, when reproducing the moving image based on the normal reproduction, the control section 42 performs a control so that the moving image is reproduced on the entire surface of the display section 40 or within a window of an arbitrary size thereof.

The first analysis result data acquisition section 44 acquires first analysis result data generated by the still image analysis section 26 of the server 12 through the network 18.

The first analysis result data acquisition section 44 may start downloading of the first analysis result data while the user does not use the image processing device 10, that is, when the user does not use an application operated on the portable terminal 14, for example, when the application waits in the background, or may periodically download the first analysis result data at a predetermined time when it is considered that a user does not use the image processing device 10 between midnight and dawn.

Further, when plural pieces of first analysis data are present, the first analysis result data acquisition section 44 may download the entirety of the first analysis result data from the server 12 according to a predetermined acquisition method, may download only the first analysis result data of a still image with a largest number of printing orders, or may download only the first analysis result data for which a printing order is finally (recently) performed.

Further, the still image analysis section 26 may be provided in the portable terminal 14 instead of the server 12. In this case, the first analysis result data acquisition section 44 is not necessary.

The moving image analysis section 46 performs image analysis for an analysis target moving image which is a moving image for which image analysis has not yet been performed, which is included in plural moving images owned by a user, stored in a storage section (not shown) of the portable terminal 14, and generates second analysis result data of the analysis target moving image including the analysis result.

In this embodiment, the moving image analysis section 46 extracts a frame image from the analysis target moving image, and performs image analysis for the extracted frame image to generate second analysis result data of the analysis target moving image.

Here, the moving image analysis section 46 sets a flag indicating that image analysis has been performed with respect to a moving image for which the image analysis has been performed, for example, to thereby make it possible to identify a moving image where image analysis has already been performed or a moving image where image analysis has not yet been performed.

Further, the moving image analysis section 46 performs image analysis for a frame image while the user does not use the image processing device, similar to a case where the first analysis result data is acquired.

The moving image analysis section 46 performs at least one of various types of image analysis including face detection, face recognition, acquisition of imaging date and time information, acquisition of imaging position information, and annotation analysis, for example, according to a predetermined image analysis method, similar to the still image analysis section 26.

The moving image analysis section 46 may perform at least one type of image analysis in the image analysis performed with respect to a still image, included in first analysis result data, for example, to generate second analysis result data. In this way, by limiting the image analysis process, it is possible to reduce the processing time.

For example, when only an analysis result of face detection is included in first analysis result data, the moving image analysis section 46 performs only the face detection, and when only imaging date and time information is included therein, the moving image analysis section 46 performs only acquisition of the imaging date and time from metadata such as header information. Further, when plural types of analysis results are included in the first analysis result data, the moving image analysis section 46 may sequentially perform plural types of image analysis corresponding to the plural types of analysis results, or may perform at least one type of image analysis among the plural types of image analysis.

Further, in order to reduce the processing time of image analysis, the moving image analysis section 46 may perform image analysis for frame images in units of a certain number of frame images, for example, every 10 frame, according to a frame image selection method set in advance. Alternatively, the moving image analysis section 46 may perform image analysis for a frame image in the order of imaging, and may terminate the image analysis at a time point when second analysis result data which is similar to first analysis result data is acquired.

The similar data detection section 48 collates the first analysis result data acquired by the first analysis result data acquisition section 44 with the second analysis result data generated by the moving image analysis section 46 to calculate a similarity between the first analysis result data and the second analysis result data, and detects the second analysis result data of which the similarity to the first analysis result data is equal to or greater than a reference value as similarity analysis result data.

It may be considered that there is a high probability that a moving image having the second analysis result data of which the similarity to the first analysis result data is equal to or greater than the reference value will be ordered again. Accordingly, the moving image having the second analysis result data of which the similarity to the first analysis result data is equal to or greater than the reference value becomes a moving image candidate to be uploaded to the server 12. Further, when there are plural pieces of second analysis result data of which the similarity to the first analysis result data is equal to or greater than the reference value, the order of sequentially uploading moving images to the server 12 may be determined according to the similarities, file sizes, or the like.

Here, the similar data detection section 48 may calculate the similarity between the first analysis result data and the second analysis result data, for example, with respect to at least one of whether the numbers of faces match each other, whether the same person is included (determination based on comparison of model data), whether imaging dates and times match each other (including a case where years and months completely match each other and a case where only years or months are different from each other) or are within a predetermined range, whether imaging positions match each other or are within a predetermined range, and whether the same keyword of annotation information is included, using a predetermined collation method.

Further, the similar data detection section 48 may calculate the similarity between the first analysis result data and the second analysis result data by performing weighting with respect to at least two of whether the numbers of faces match each other, whether the same person is included, whether imaging dates and times match each other or are within a predetermined range, whether imaging positions match each other or are within a predetermined range, and whether the same keyword of annotation information is included.

Further, when the similarities are the same, for example, a moving image with a large file size may be set to have a higher uploading priority with respect to the server 12.

The similar data detection section 48 may detect the second analysis result data of which the similarity to the first analysis result data is smaller than the reference value from the second analysis result data generated by the moving image analysis section 46 as the similarity analysis result data. On the other hand, it may be considered that there is a high possibility that a moving image having the second analysis result data of which the similarity to the first analysis result data is smaller than the reference value will be ordered. In this case, a moving image having the second analysis result data of which the similarity to the first analysis result data is smaller than the reference value becomes a moving image candidate to be uploaded to the server 12.

The moving image information output section 50 selects an analysis target moving image having the similarity analysis result data detected by the similar data detection section 48 from analysis target moving images as a processing target moving image, and outputs information about the selected processing target moving image.

The moving image information output section 50 transmits the information about the processing target moving image to an external processing device such as the server 12 through the network 18 while the user does not use the image processing device, similar to a case where the first analysis result data is acquired.

Further, the moving image information output section 50 may transmit the information about the processing target moving image to an external processing device such as the server 12 or another portable terminal 14 through the network 18 that performs image processing of the processing target moving image, for example. In this case, the moving image information output section 50 may transmit a list of processing target moving images to the external processing device as the information about the processing target moving image. For example, the moving image information output section 50 may transmit the processing target moving images (moving image data) that are considered to be actually shown in the list or link information relating to the processing target moving images.

The second transmission section 52 transmits a variety of data including a moving image, a captured image, first analysis result data, or the like between the portable terminal 14 and the server 12.

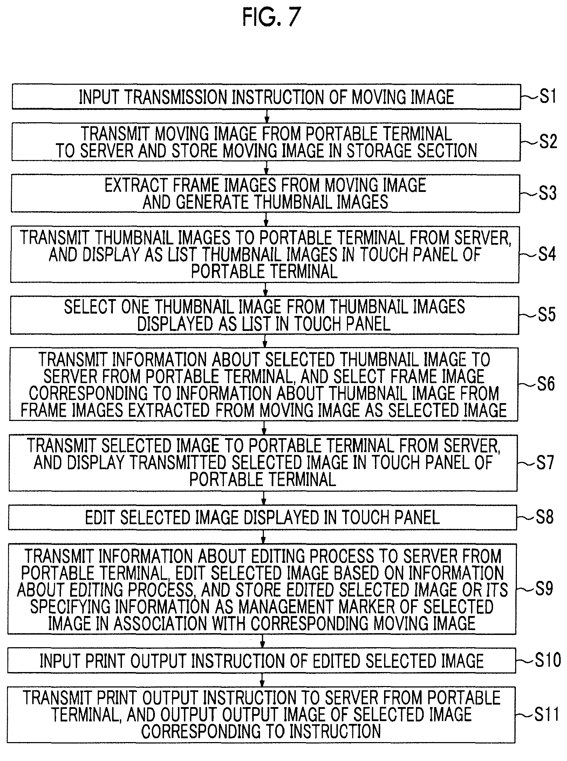

Next, an operation when the image processing device 10 generates AR content and outputs an output image of a selected image will be described with reference to a flowchart shown in Fig. 7.

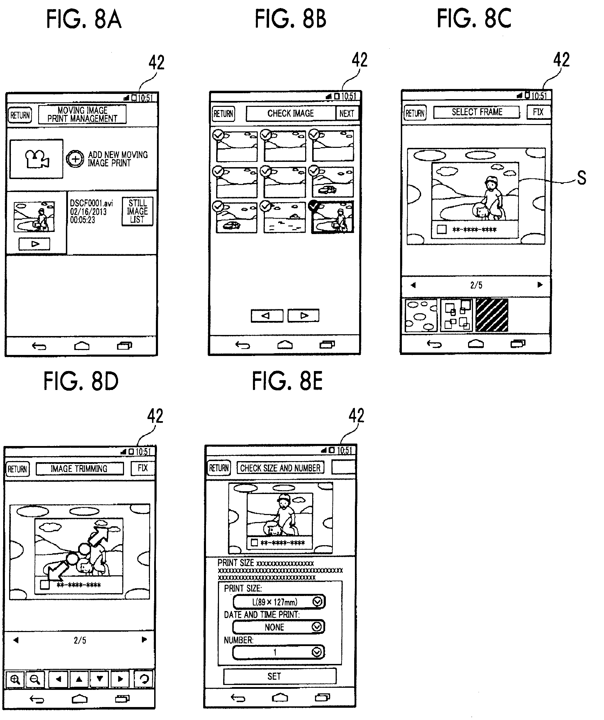

First, a user operates the touch panel 54 (input section 38) while checking a moving image print management screen shown in Fig. 8A displayed in the touch panel 54 (display section 40) of the portable terminal 14 to input a transmission instruction of a moving image (moving image data) (step S1).

The moving image for which the transmission instruction is performed is transmitted from the portable terminal 14 to the server 12 through the network 18 by the second transmission section 52. The server 12 receives the moving image transmitted from the portable terminal 14 through the first transmission section 34 and stores the received moving image in the storage section 22 (step S2).

Subsequently, frame images (image data) are extracted from the received moving image, and thumbnail images (image data) of the extracted frame images are generated, by the content generation section 20 (step S3).

The generated thumbnail images are transmitted to the portable terminal 14 from the server 12. In the portable terminal 14, as shown in an image check screen in Fig. 8B, the received thumbnail images are displayed as a list in the touch panel 54 (display section 40) (step S4).

Subsequently, the user operates the touch panel 54 (input section 38) to select one thumbnail image from the thumbnail images displayed as a list in the touch panel 54 (display section 40) (step S5). In the example shown in Fig. 8B, it is assumed that a thumbnail image surrounded by a thick frame line on a right lower side is selected.

Information about the selected thumbnail image is transmitted to the server 12 from the portable terminal 14. The server 12 selects a frame image corresponding to the information about the received thumbnail image from among the frame images extracted from the moving image by the content generation section 20 as a selected image (step S6).

Instead of the thumbnail images, the frame images extracted from the moving image may be used.

Then, the selected image (image data) is transmitted to the portable terminal 14 from the server 12. In the portable terminal 14, the received selected image is displayed in the touch panel 54 (display section 40) of the portable terminal 14 (step S7).

Subsequently, the user operates the touch panel 54 (input section 38) to edit the selected image displayed in the touch panel 54 (display section 40) (step S8). An editing process performed by the user includes processes such as selection of a background frame which becomes a background of the selected image, as shown on a frame selection screen in Fig. 8C, or image correction, trimming, enlargement and reduction, or rotation with respect to the selected image, as shown on an image trimming screen in Fig. 8D.

Subsequently, information about the editing process is transmitted to the server 12 from the portable terminal 14. In the server 12, the selected image is edited based on the received information about the editing process by the content generation section 20. The edited selected image or its specifying information is stored as a management marker of the selected image in the storage section 22 in association with a corresponding moving image (step S9).

Here, the editing of the selected image is not essential.

Then, as shown on a size and number of sheets setting screen in Fig. 8E, the user operates the touch panel 54 (input section 38) to set a print size, the number of printed sheets or the like, and inputs a print output instruction of the edited selected image (step S10).

The print output instruction is transmitted to the server 12 from the portable terminal 14. A selected image corresponding to the received print output instruction is transmitted to the printer 16 from the server 12, and an output image (printed matter) of the selected image is output by the printer 16 (step S11).

The output image is delivered to the user.

As described above, the AR content in which the moving image and the selected image extracted from the moving image are associated with each other is stored in the storage section 22, and the output image of the selected image is output.

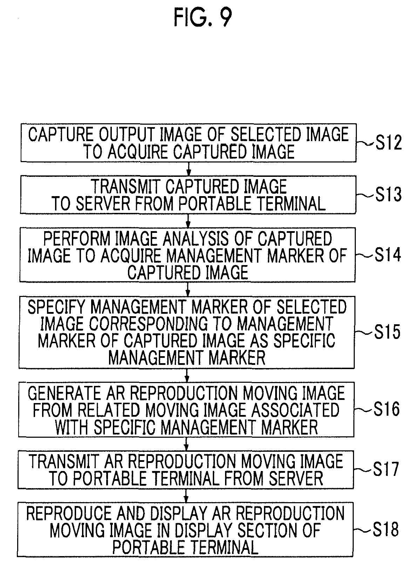

Next, an operation when the image processing device 10 generates an AR reproduction moving image and reproduces and displays the generated AR reproduction moving image will be described with reference to a flowchart shown in Fig. 9.

First, the output image (printed matter) of the selected image is captured by the image capturing section 36 to acquire a captured image (image data) (step S12). The captured output image is displayed in the touch panel 54 (display section 40) of the portable terminal 14.

The acquired captured image is transmitted to the server 12 from the portable terminal 14 through the network 18 by the second transmission section 52. The server 12 receives the captured image transmitted from the portable terminal 14 through the first transmission section 34 (step S 13).

Subsequently, image analysis for the captured image is performed by the captured image analysis section 24 to acquire a management marker of the captured image (step S14).

Then, a management marker of a selected image corresponding to the management marker of the captured image is specified as a specific management marker from management markers of selected images stored in the storage section 22 by the management marker specifying section 28 (step S 15).

Then, an AR reproduction moving image is generated from a related moving image associated with the specific management marker by the moving image processing section 30 (step S16).

Then, the AR reproduction moving image generated by the moving image processing section 30 is transmitted to the portable terminal 14 from the server 12. The portable terminal 14 receives the AR reproduction moving image transmitted from the server 12 (step S17).

If the AR reproduction moving image is received, the received AR reproduction moving image is reproduced and displayed in a display portion of the output image displayed in the touch panel 54 (display section 40) of the portable terminal 14 under the control of the control section 42 (step S18).

As described above, if the output image is captured, the management marker of the selected image corresponding to the management marker of the captured image is specified, and the AR reproduction moving image is generated from the related moving image associated with the specific management marker and is reproduced and displayed in the portable terminal 14.

When the output image of the selected image is output, for example, an access key formed by a character string including numbers or letters may be printed in the output image of the selected image. The access key is uniquely determined for each user. As the user inputs the access key, when specifying the specific management marker from the management markers of the selected images stored in the storage section 22, it is possible to define the specific management marker in a range of the management markers of the selected images associated with the moving image transmitted to the server 12 by each user.

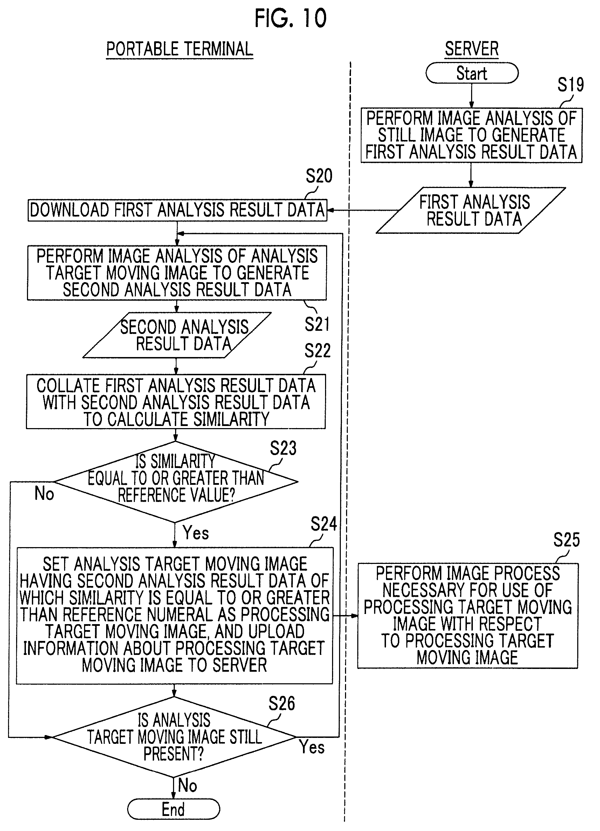

Next, an operation when the processing target moving image is processed beforehand in the image processing device 10 will be described with reference to a flowchart shown in Fig. 10.

First, in the server 12, image analysis of a still image for which printing has ordered in the past by a user, which is stored in the storage section 22, is performed by the still image analysis section 26, and first analysis result data including the analysis result is generated (step S19).

The first analysis result data is stored in the storage section 22 so as to be downloadable from an application operated on the portable terminal 14 of the user.

Subsequently, in the portable terminal 14, while the user does not use the image processing device 10, the first analysis result data generated by the still image analysis section 26 of the server 12 is read from the storage section 22 by the first analysis result data acquisition section 44, and is acquired (downloaded from the server 12) through the first transmission section 34 of the server 12, the network 18, and the second transmission section 52 of the portable terminal 14 (step S20).

Then, image analysis of an analysis target moving image for which image analysis has not yet been performed, included in plural moving images is performed by the moving image analysis section 46, and second analysis result data including the analysis result is generated (step S21).

Then, the first analysis result data acquired by the first analysis result data acquisition section 44 and the second analysis result data generated by the moving image analysis section 46 are collated with each other to calculate a similarity between them by the similar data detection section 48 (step S22).

Here, when the similarity is equal to or greater than a reference value (Yes in step S23), the second analysis result data of which the similarity is equal to or greater than the reference value is detected as similarity analysis result data by the similar data detection section 48. Further, an analysis target moving image including the similarity analysis result data detected by the similar data detection section 48 is selected from among the analysis target moving images as a processing target moving image, and information about the selected processing target moving image is output to an external processing device by the moving image information output section 50 (step S24). Then, the procedure proceeds to step S25.

In the case of this embodiment, the moving image information output section 50 uploads the processing target moving image to the server 12 through the second transmission section 52 of the portable terminal 14, the network 18, and the first transmission section 34 of the server 12.

Then, in the server 12, before the user uses the processing target moving image received from the moving image information output section 50 of the portable terminal 14, a control is performed so that image processing necessary for the use is performed with respect to the processing target moving image by the moving image processing control section 32 (step S25).

In the case of this embodiment, a process of extracting a frame image from the processing target moving images by the content generation section 20 and a process of generating an AR reproduction moving image by the moving image processing section 30 are performed under the control of the moving image processing control section 32.

When the similarity between the first analysis result data and the second analysis result data is smaller than the reference value (No in step S23), and after the information about the processing target moving image is output to the external processing device in step S24, and when the analysis target moving image is still present in the plural moving images (Yes in step S26), the procedure returns to step S21, and then, the operations are repeatedly performed. On the other hand, when the analysis target moving image is not present (No in step S26), the procedure is terminated.

In this way, in the image processing device 10, a processing target moving image is automatically selected from plural moving images, and information about the selected processing target moving image is output to an external processing terminal such as the server 12. That is, even when a user has a large amount of many moving images and has already forgotten imaging contents thereof, it is possible to automatically select a user preferred moving image by the image processing device 10, and thus, it is possible to reduce a user's effort for selecting a moving image.

Further, in the image processing device 10, while the user does not use the image processing device 10, a user preferred moving image is uploaded to the server 12, and image processing necessary for use of the moving image is performed. Thus, when the user uses the moving image, it is possible to shorten a waiting time until the moving image is uploaded to the server 12, and thus, it is possible to prevent reduction in motivation for use of the system.

It is preferable that the processes performed by the first analysis result data acquisition section 44, the moving image analysis section 46, the similar data detection section 48, and the moving image information output section 50 are performed under the permission of the user. Further, since the processes take a long period of time and consume a large amount of battery power of the portable terminal 14, for example, it is preferable that the processes are performed when the portable terminal 14 is connected to a power source, or when the portable terminal 14 is connected to the server 12 through a wireless local area network (LAN) such as wireless fidelity (WiFi) instead of a telephone line.

Next, an operation of the image processing device 10 when a processing target moving image is processed will be described using an example of a case where a moving image is uploaded to the server 12 where the same person is included based on face recognition.

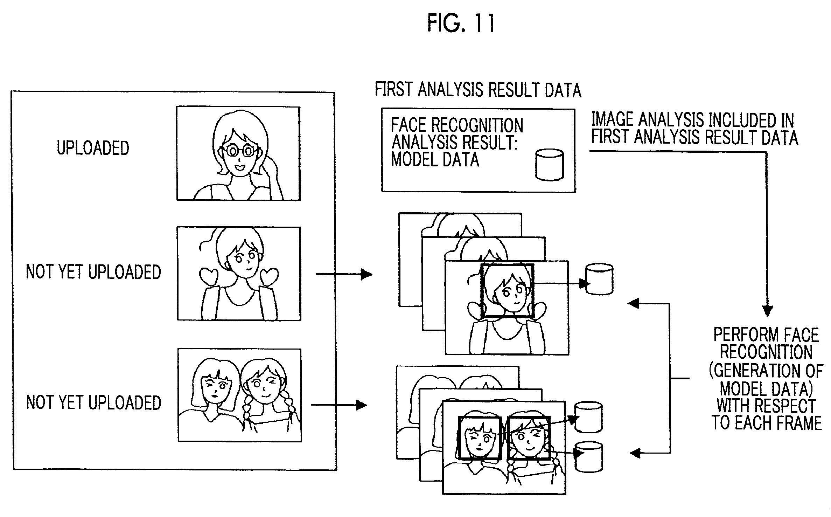

As shown in a left part of Fig. 11, it is assumed that three moving images are stored in the portable terminal 14 of a user. The uppermost moving image among the three moving images is a moving image which is already uploaded to the server 12, and the two lower images are moving images which are not yet uploaded to the server 12.

As shown in a right part of Fig. 11, first analysis result data downloaded from the server 12 by the first analysis result data acquisition section 44 includes face model data as an analysis result of face recognition.

In the portable terminal 14, frame images are extracted from the two lower moving images shown in the left part of Fig. 11 by the moving image analysis section 46, as shown in the right part of Fig. 11, and the same face recognition as the image analysis included in the first analysis result data is performed with respect to the extracted frame images, and second analysis result data including face model data which is an analysis result of the face recognition is generated with respect to each of the two lower moving images.

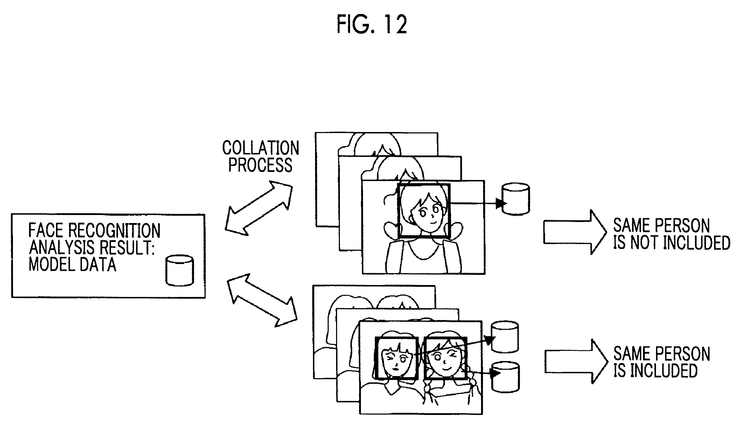

Subsequently, as shown in Fig. 12, the first analysis result data and the second analysis result data of the two lower moving images shown in the left part of Fig. 11 are collated with each other by the similar data detection section 48 (model data collation). As a result, it is detected that the upper moving image among the two lower moving images does not include the same person as the model data included in the first analysis result data and the lower moving image thereof includes the same person.

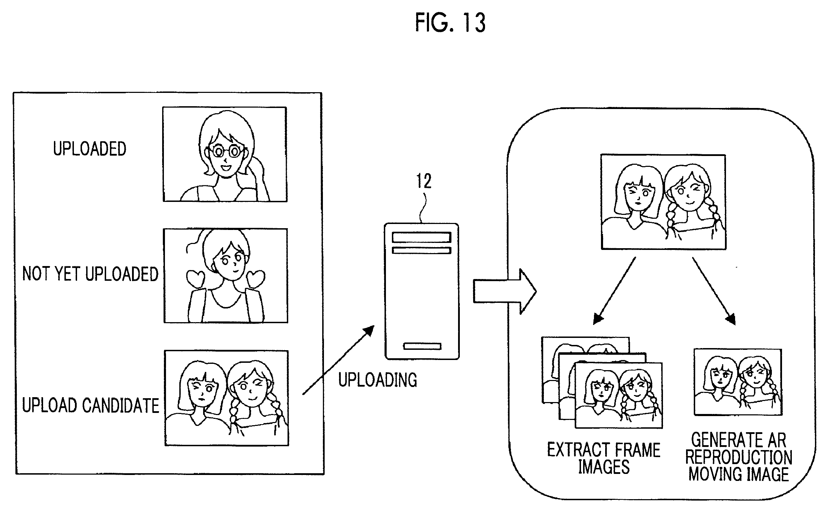

Accordingly, as shown in a left part of Fig. 13, the lower moving image including the same person among the two lower moving images shown in the left part of Fig. 11 becomes a moving image candidate (upload candidate) to be uploaded to the server 12, and the lower moving image is uploaded to the server 12 by the moving image information output section 50.

In the server 12, as shown in a right part of Fig. 13, a process of extracting a frame image and a process of generating an AR reproduction moving image with respect to the moving image uploaded from the portable terminal 14 are performed beforehand by the moving image processing control section 32.

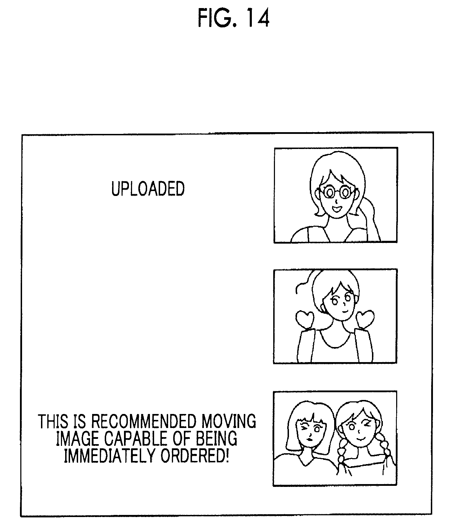

Thus, when the user starts an application operated on the portable terminal 14 next time, as shown in Fig. 14, for example, a message or the like indicating that the uppermost moving image is already printed and the lowermost moving image is a recommended moving image capable of being immediately ordered for printing without a waiting time for uploading is displayed on the screen of the portable terminal. In response to this, when the user selects the lowermost moving image, it is possible to immediately make a printing order without waiting due to uploading or the like of the moving image.

The invention is not limited to a case where a moving image is AR-reproduced, and may be used in various systems that select a processing target moving image from among plural moving images and use information about the selected processing target moving image.

The device of the invention may be configured so that the respective components of the device are formed by dedicated-use hardware, or may be configured by a computer in which the respective components are programmed.

The method of the invention may be executed by a program that causes a computer to execute respective steps thereof, for example. Further, a computer-readable recording medium that stores the program may also be provided.

The invention is basically configured as described above.

Hereinbefore, the invention has been described in detail, but the invention is not limited to the above-described embodiments, and may include various improvements or modifications in a range without departing from the spirit of the invention.

## Claims

1. An image processing device that selects a processing target moving image which is a target of image processing from among a plurality of moving images owned by a user and outputs information about the selected processing target moving image, the device comprising:
a moving image analysis section that performs image analysis for an analysis target moving image which is a moving image for which image analysis has not yet been performed, included in the plurality of moving images, and generates second analysis result data about the analysis target moving image, including an analysis result of the image analysis;
a similar data detection section that collates first analysis result data generated by performing image analysis for a still image owned by the user with the second analysis result data generated by the moving image analysis section to calculate a similarity between the first analysis result data and the second analysis result data, and detects second analysis result data of which the similarity to the first analysis result data is equal to or greater than a reference value or is smaller than the reference value as similarity analysis result data; and
a moving image information output section that selects the analysis target moving image including the similarity analysis result data detected by the similar data detection section from among the analysis target moving images as the processing target moving image, and outputs information about the selected processing target moving image.

2. The image processing device according to claim 1,
wherein the moving image analysis section performs at least one type of image analysis in the image analysis performed with respect to the still image, included in the first analysis result data, to generate the second analysis result data.

3. The image processing device according to claim 1 or 2,
wherein the moving image analysis section extracts a frame image from the analysis target moving image, and performs image analysis for the extracted frame image to generate the second analysis result data of the analysis target moving image.

4. The image processing device according to claim 3,
wherein the moving image analysis section performs the image analysis for the frame images in units of the predetermined number of frame images.

5. The image processing device according to claim 3,
wherein the moving image analysis section performs the image analysis for the frame image in the order of imaging, and terminates the image analysis at a time point when second analysis result data similar to the first analysis result data is acquired.

6. The image processing device according to any one of claims 1 to 5,
wherein the moving image analysis section performs the image analysis during other than the user using the image processing device.

7. The image processing device according to any one of claims 1 to 6,
wherein the similar data detection section calculates the similarity between the first analysis result data and the second analysis result data with respect to at least one of whether the numbers of faces match each other, whether the same person is included, whether imaging dates and times match each other or are within a predetermined range, whether imaging positions match each other or are within a predetermined range, and whether the same keyword of annotation information is included.

8. The image processing device according to any one of claims 1 to 6,
wherein the similar data detection section calculates the similarity between the first analysis result data and the second analysis result data by performing weighting with respect to at least two of whether the numbers of faces match each other, whether the same person is included, whether imaging dates and times match each other or are within a predetermined range, whether imaging positions match each other or are within a predetermined range, and whether the same keyword of annotation information is included.

9. The image processing device according to any one of claims 1 to 8,
wherein the moving image information output section transmits the information about the processing target moving image to an external processing device that performs image processing of the processing target moving image through a network.

10. The image processing device according to claim 9,
wherein the moving image information output section transmits, as the information about the processing target moving image, a list of the processing target moving images to the external processing device.

11. The image processing device according to claim 9,
wherein the moving image information output section transmits, as the information about the processing target moving image, the processing target moving image to the external processing device.

12. The image processing device according to claim 9,
wherein the moving image information output section transmits, as the information about the processing target moving image, link information about the processing target moving image to the external processing device.

13. The image processing device according to any one of claims 9 to 12,
wherein the moving image information output section transmits the information about the processing target moving image to the external processing device during other than the user using the image processing device.

14. The image processing device according to any one of claims 9 to 13,
wherein the external processing device includes a moving image processing control section that performs a control, before the user uses the processing target moving image received from the moving image information output section, so that image processing necessary for the use is performed with respect to the processing target moving image.

15. The image processing device according to any one of claims 9 to 14,
wherein the external processing device includes a still image analysis section that performs the image analysis for the still image to generate the first analysis result data, and
wherein the image processing device further comprises a first analysis result data acquisition section that acquires the first analysis result data from the still image analysis section through a network during other than the user using the image processing device.

16. The image processing device according to any one of claims 1 to 14, further comprising:
a still image analysis section that performs the image analysis for the still image to generate the first analysis result data.

17. The image processing device according to claim 15 or 16,
wherein the still image analysis section performs at least one type of image analysis among plural types of image analysis including face detection, face recognition, acquisition of imaging date and time information, acquisition of imaging position information, and acquisition of annotation information.

18. The image processing device according to claim 17,
wherein the still image analysis section sequentially performs the plural types of image analysis, and generates, at a time point when at least one analysis result of the plural types of image analysis is acquired, the first analysis result data including the at least one analysis result.

19. The image processing device according to claim 17,
wherein the still image analysis section sequentially performs the plural types of image analysis, and generates, at a time point when all analysis results of the plural types of image analysis are acquired, the first analysis result data including all the analysis results.

20. The image processing device according to any one of claims 1 to 19,
wherein the still image is a still image for which printing has ordered in the past by the user.

21. An image processing method for selecting a processing target moving image which is a target of image processing from among a plurality of moving images owned by a user and outputting information about the selected processing target moving image, comprising the steps of:
performing image analysis for an analysis target moving image which is a moving image for which image analysis has not yet been performed, included in the plurality of moving images, and generating second analysis result data about the analysis target moving image, including an analysis result of the image analysis, by a moving image analysis section;
collating first analysis result data generated by performing image analysis for a still image owned by the user with the second analysis result data generated by the moving image analysis section to calculate a similarity between the first analysis result data and the second analysis result data, and detecting second analysis result data of which the similarity to the first analysis result data is equal to or greater than a reference value or is smaller than the reference value as similarity analysis result data, by a similar data detection section; and
selecting the analysis target moving image including the similarity analysis result data detected by the similar data detection section from among the analysis target moving images as the processing target moving image, and outputting information about the selected processing target moving image, by a moving image information output section.

22. A program that causes a computer to execute the steps of the image processing method according to claim 21.

23. A computer-readable recording medium that stores a program that causes a computer to execute the steps of the image processing method according to claim 21.
